# EUROPEAN PATENT APPLICATION

(11) **EP 3 460 580 A1**
(43) Date of publication of application: **27.03.2019**
(21) Application number: 18192201.4
(22) Date of filing: 03.09.2018
(51) Int. Cl.: G03G 15/00, B65H 39/00

(54) **INFORMATION GENERATING DEVICE, IMAGE FORMING APPARATUS, AND INFORMATION GENERATING METHOD**

(30) Priority: 21.09.2017 US 201715711035
(71) Applicant: Toshiba Tec Kabushiki Kaisha, Shinagawa-ku Tokyo (JP); Kabushiki Kaisha Toshiba, Minato-ku, Tokyo (JP)
(72) Inventor: Ishii, Mitsunori, Tokyo, 141-8562 (JP)
(74) Representative: Hoffmann Eitle

(57) **Abstract**

According to one embodiment, there is provided an information generating device which generates information to be used in an image forming apparatus that performs continuous printing by binding a plurality of sheets on which an image is formed among the plurality of sheets using a sheet binding mechanism, and includes a blank determination unit. The blank determination unit determines blanks of the sheets in a case of forming the image that shows characters on the plurality of sheets based on the number of the characters formed on the sheets, the types of the characters, the sizes of the characters, and a sheet binding position.

## Description

### FIELD

Embodiments described herein relate generally to an information generating device, an image forming apparatus, and an information generating method.

### BACKGROUND

In the related art, printing in which a long paper sheet having a size different from that of a fixed paper sheet is used is known.

However, in the printing in which the long paper sheet is used, there is a case where a problem, such as paper jamming or a shift of a printing position, is generated.

### SUMMARY OF THE INVENTION

One of the objects of the present invention is to improve prior art techniques and overcome at least some of the prior art problems as for instance above illustrated.

According to a first aspect of the present invention, it is provided an information generating device which generates information to be used in an image forming apparatus that performs continuous printing by binding a plurality of sheets on which an image is formed over the plurality of sheets using a sheet binding mechanism, the device comprising: a blank determination unit configured to determine blanks of the sheets in a case of forming the image that shows characters on the plurality of sheets based on the number of the characters formed on the sheets, the types of the characters, the sizes of the characters, and a sheet binding position of the sheet binding mechanism.

Optionally, in the device according to the first aspect of the invention, the blank determination unit determines the blanks further based on a printing direction of the sheets.

Optionally, in the device according to the first aspect of the invention, the blank determination unit determines the blanks based on the number of the sheets designated by a user.

Optionally, in the device according to the first aspect of the invention, the blank determination unit determines the blanks based on the blanks of the sheets disposed at ends and the blanks of the sheets disposed at positions other than the ends among the plurality of sheets.

Optionally, in the device according to the first aspect of the invention, the blank determination unit determines the blanks based on the number of the sheet binding positions at which binding is performed by the sheet binding mechanism.

Optionally, in the device according to the first aspect of the invention, the blank determination unit determines the direction of the sheets in accordance with the types of the characters, and determines the blanks based on the determined direction.

Optionally, in the device according to the first aspect of the invention, the blank determination unit determines the number of the sheets in accordance with the number of the characters, and determines the blanks based on the determined number of the sheets.

According to a second aspect of the present invention, it is provided an image forming apparatus comprising the information generating device according to the first aspect of the invention and a sheet binding mechanism.

Optionally, in the apparatus according to the second aspect of the invention, the sheet binding mechanism further includes a folding unit which folds a sheet connected to a sheet to which printing is performed next among two sheets after binding end parts of the two sheets, and the blank determination unit determines the blanks based on a folding position at which the folding unit folds the sheet.

According to a third aspect of the present invention, it is provided an information generating method for generating information to be used in an image forming apparatus that performs continuous printing by binding a plurality of sheets on which an image is formed over the plurality of sheets using a sheet binding mechanism, the method comprising:
determining blanks of the sheets in a case of forming the image that shows characters on the plurality of sheets based on the number of the characters formed on the sheets, the types of the characters, the sizes of the characters, and a sheet binding position.

### DESCRIPTION OF THE DRAWINGS

FIG. 1 is an external configuration view illustrating an example of an image forming system of an embodiment.
FIG. 2 is a view schematically illustrating an example of a configuration of a post-processing device.
FIG. 3 is a view schematically illustrating an example of a configuration of a front roller, a processing tray, and a positioning plate of the post-processing device.
FIG. 4 is a view schematically illustrating an example of a position of a first sheet in the post-processing device.
FIG. 5 is a view schematically illustrating an example of a position of a second sheet in the post-processing device.
FIG. 6 is a view schematically illustrating an example of adjustment of the positioning plate based on the positions of the first sheet and the second sheet.
FIG. 7 is a view schematically illustrating an example of a stapling position at which the first sheet and the second sheet are linked to each other.
FIG. 8 is a view schematically illustrating an example of a configuration of a discharge gate.
FIG. 9 is a view schematically illustrating an example of a configuration of a discharge roller and a discharge port.
FIG. 10 is a view illustrating an example of the sheets linked to each other by direct linking.
FIG. 11 is a view schematically illustrating an example of a configuration of the post-processing device.
FIG. 12 is a first view schematically illustrating a position of the first sheet in the post-processing device.
FIG. 13 is a second view schematically illustrating the position of the first sheet in the post-processing device.
FIG. 14 is a third view schematically illustrating the position of the first sheet in the post-processing device.
FIG. 15 is a first view schematically illustrating the position of the second sheet in the post-processing device.
FIG. 16 is a second view schematically illustrating the position of the second sheet in the post-processing device.
FIG. 17 is a view schematically illustrating an example of the stapling position at which the first sheet and the second sheet are linked to each other in the post-processing device.
FIG. 18 is a first view schematically illustrating an example of folding in a non-post-processing device.
FIG. 19 is a second view schematically illustrating an example of the folding in the non-post-processing device.
FIG. 20 is a third view schematically illustrating an example of the folding in the non-post-processing device.
FIG. 21 is a view schematically illustrating an example of a configuration of a discharge roller and a discharge port in the non-post-processing device.
FIG. 22 is a view illustrating an example of the sheets linked to each other by folding.
FIG. 23 is a functional configuration view illustrating an example of a configuration of an information generating device of the embodiment.
FIG. 24 is a view illustrating an example of a printer driver image displayed on a display device.
FIG. 25 is a view schematically illustrating an example of a blank of the sheets linked to each other by the direct linking.
FIG. 26 is a view schematically illustrating an example of the blank of the sheets linked to each other by the folding.
FIG. 27 is a flowchart illustrating an example of an operation of the information generating device of the embodiment.
FIG. 28 is a view schematically illustrating another example in a printing direction of the sheets.

### DETAILED DESCRIPTION

In general, according to one embodiment, there is provided an information generating device which generates information to be used in an image forming apparatus that performs continuous printing by binding a plurality of sheets on which an image is formed over the plurality of sheets using a sheet binding mechanism, and includes a blank determination unit. The blank determination unit determines blanks of the sheets in a case of forming the image that shows characters on the plurality of sheets based on the number of the characters formed on the sheets, the types of the characters, the sizes of the characters, and a sheet binding position.

Hereinafter, the information generating device of the embodiment will be described with reference to the drawings.

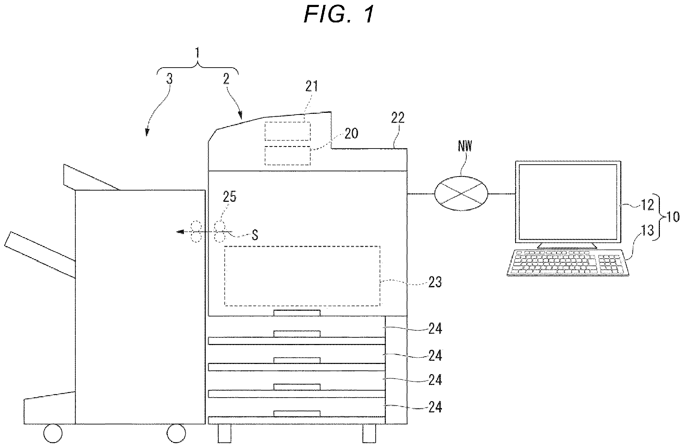

FIG. 1 is an external configuration view illustrating an example of an image forming system 1 of the embodiment. In the embodiment, the image forming system 1 includes an image forming apparatus 2, a post-processing device 3, and an information generating device 10. The information generating device 10 is a terminal, such as a personal computer. A display device 12, such as a liquid crystal display, and an input device 13, such as a mouse and a keyboard, are connected to the information generating device 10. The information generating device 10 transmits image information or the like to the image forming apparatus 2 via a network NW. In addition, the information generating device 10 transmits the information (hereinafter, post-processing information) related to the type of post-processing to the image forming apparatus 2 (post-processing device 3) via the network NW.

The image forming apparatus 2 forms an image on a sheet-like recording medium (hereinafter, referred to as "sheet S"), such as a paper sheet. For example, the image forming apparatus 2 is a multi-function peripherals (MFP) which is a multifunction machine, a printer, or a copying machine. The post-processing device 3 performs the post-processing with respect to a sheet S transported from the image forming apparatus 2. The sheet S is not limited to the paper sheet, and includes a plastic sheet, such as an overhead projector (OHP) sheet.

The image forming apparatus 2 includes a control unit 20, a control panel 21, a scanner unit 22, a print unit 23, a paper feeding unit 24, a paper discharge unit 25, and a communication unit 26 (which is not illustrated).

The control panel 21 includes various types of keys or a touch panel which receives an operation of the user.

The scanner unit 22 includes a reading unit which reads image information of copy target. The scanner unit 22 transmits the read image information to the print unit 23.

The print unit 23 forms an output image (hereinafter, referred to as "toner image") by a developer, such as a toner, based on the image information transmitted from the scanner unit 22 or external equipment. The print unit 23 transfers the toner image onto a surface of the sheet S. The print unit 23 applies heat and pressure to the toner image transferred to the sheet S, and fixes the toner image to the sheet S.

The paper feeding unit 24 feeds the sheet S to the print unit 23 one by one in accordance with a timing at which the print unit 23 forms the toner image.

The paper discharge unit 25 transports the sheet S discharged from the print unit 23 to the post-processing device 3.

The communication unit 26 receives the information from the information generating device 10, and feeds the information to the control unit 20. In addition, the communication unit 26 transmits the information generated by the control unit 20 to the information generating device 10.

The control unit 20 controls the entire operation of the image forming apparatus 2. In other words, the control unit 20 controls the control panel 21, the scanner unit 22, the print unit 23, the paper feeding unit 24, and the paper discharge unit 25. The control unit 20 is configured of a control circuit including a central processing unit (CPU), a read only memory (ROM), and a random access memory (RAM). The processing of the control unit 20 will be described later in detail.

Next, the post-processing device 3 will be described. The post-processing device 3 is disposed to be adjacent to the image forming apparatus 2. The sheet S is transported to the post-processing device 3 from the image forming apparatus 2. The post-processing device 3 executes the post-processing with respect to the transported sheet S. The post-processing device 3, for example, performs stapling. The stapling is processing for binding the sheets S using a stapler. The stapling, for example, may bind the sheets S using a metal stapler, and may fold the sheets S to each other by processing the sheets into a shape of teeth by a pressure.

The post-processing device 3 performs the stapling, for example, with respect to the fixed sheet S discharged from the paper discharge unit 25 of the image forming apparatus 2, and performs the post-processing for linking the plurality of sheets S to each other. The sheet S having a fixed size is, for example, the sheet S having an A3 size and an A4 size. The post-processing device 3 performs the post-processing for linking the plurality of sheets S to each other, and discharges the linked sheets S as a long paper sheet. In the following description, among the paper sheets discharged from the paper discharge unit 25 of the image forming apparatus 2, a certain sheet S is described as a first sheet S1. In addition, among the paper sheets discharged from the paper discharge unit 25 of the image forming apparatus 2, a paper sheet to be discharged next after the first sheet S1 is described as a second sheet S2. In addition, if the first sheet S1 and the second sheet S2 are not distinguished from each other, the sheets will be described as the sheet S together. In the embodiment, the post-processing device 3 links the plurality of sheets S to each other by two methods, such as the direct linking and the folding. The direct linking is processing for disposing the sheets at a position at which the staple is seen from a surface on which the toner image of the linked sheets S is formed. In addition, the folding is post-processing for disposing the sheets at a position at which the staple is not seen from the surface on which the toner image of the linked sheets S is formed.

Hereinafter, a post-processing device 3A which performs the direct linking will be described, and then, a post-processing device 3B which performs the folding will be described.

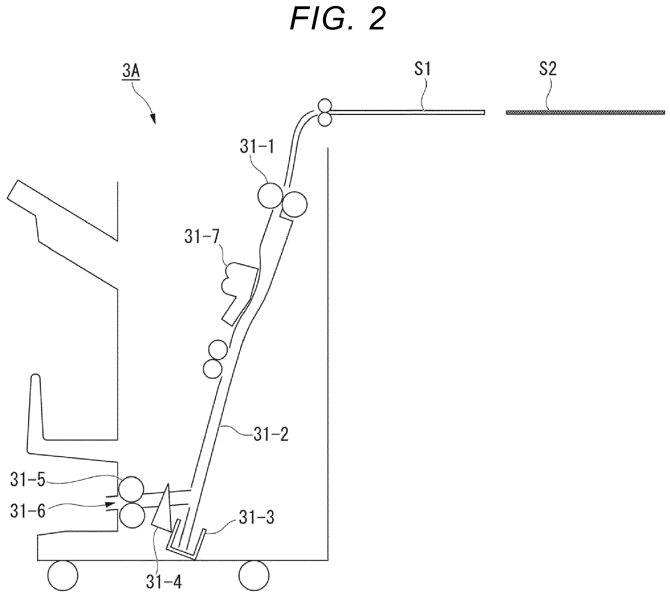

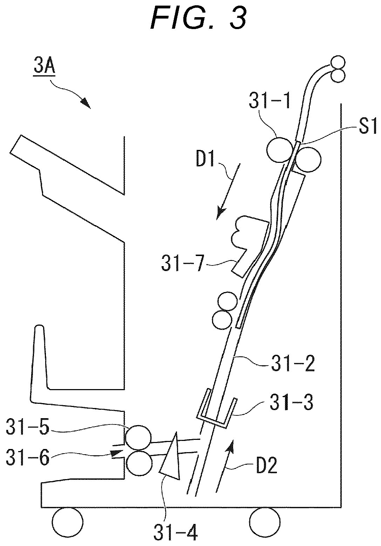

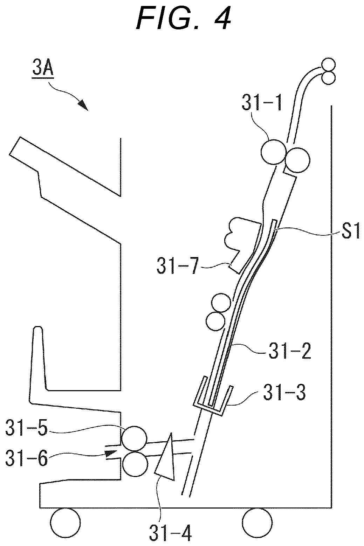

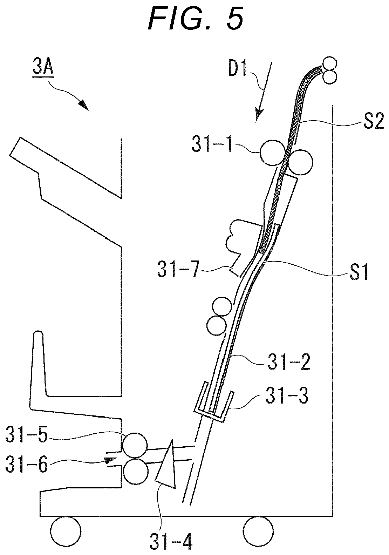

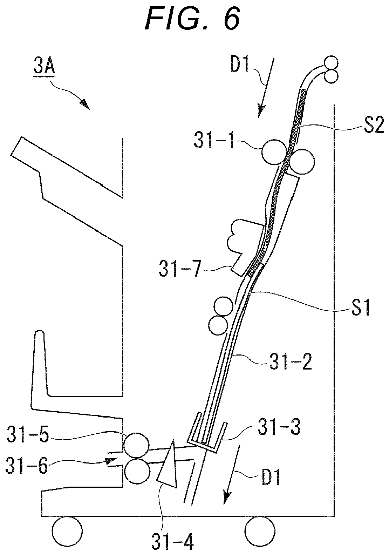

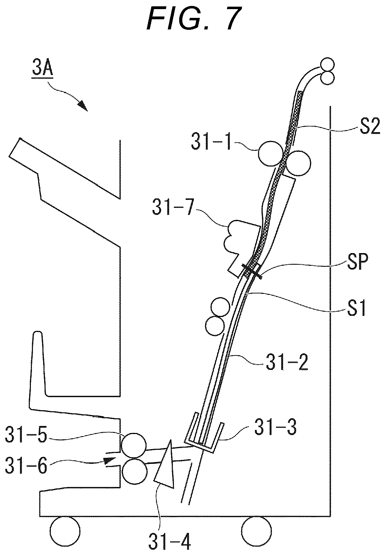

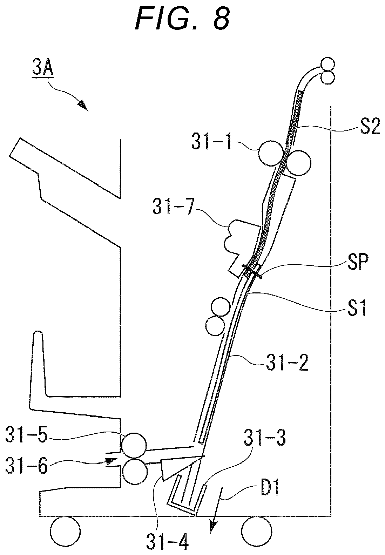

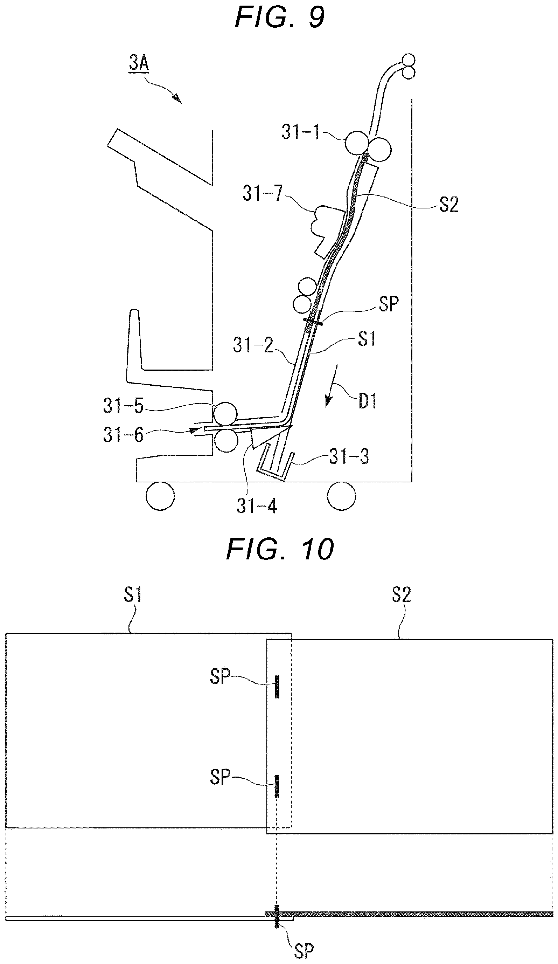

Hereinafter, a configuration of the post-processing device 3A will be described with reference to FIGS. 2, 3, 4, 5, 6, 7, 8, and 9. FIG. 2 is a view schematically illustrating an example of a configuration of the post-processing device 3A. FIG. 3 is a view schematically illustrating an example of a configuration of a front roller 31-1, a processing tray 31-2, and a positioning plate 31-3 of the post-processing device 3A. FIG. 4 is a view schematically illustrating an example of a position of the first sheet S1 in the post-processing device 3A. FIG. 5 is a view schematically illustrating an example of the second sheet S2 in the post-processing device 3A. FIG. 6 is a view schematically illustrating an example of adjustment of the positioning plate 31-3 based on the positions of the first sheet S1 and the second sheet S2. FIG. 7 is a view schematically illustrating an example of a position of a staple SP which links the first sheet S1 and the second sheet S2 to each other. FIG. 8 is a view schematically illustrating an example of a configuration of a discharge gate 31-4. FIG. 9 is a view schematically illustrating an example of a configuration of a discharge roller 31-5 and a discharge port 31-6.

As illustrated in FIG. 2, in an example of the embodiment, the post-processing device 3A includes the front roller 31-1, the processing tray 31-2, the positioning plate 31-3, the discharge gate 31-4, the discharge roller 31-5, the discharge port 31-6, and a stapler 31-7.

The front roller 31-1 and the discharge roller 31-5 move the sheet S in a transport direction or in a direction reverse to the transport direction by driving. Specifically, the front roller 31-1 and the discharge roller 31-5 rotate while nipping the sheet S from both sides in the thickness direction, and move the sheet S. In the processing tray 31-2, the sheet S which moves in a transport path in the post-processing device 3A is temporarily disposed. In addition, the positioning plate 31-3 supports the sheet S in the post-processing device 3A, and moves the sheet S to a position at which the stapler 31-7 performs the stapling. The stapler 31-7 performs the stapling with respect to the sheet S disposed at a position at which the stapling is performed. The discharge gate 31-4 switches a discharge path of the sheet S. Specifically, the discharge gate 31-4 switches a discharge port of the sheet S to the discharge port 31-6 or a discharge port other than the discharge port 31-6. The discharge port 31-6 discharges the post-processed sheet S by the post-processing device 3A. In addition, if the discharge gate 31-4 does not discharge the sheet S to the discharge port other than the discharge port 31-6, the post-processing device 3A may not be provided with the discharge gate 31-4.

The sheet S is fed from the image forming apparatus 2 in an order of the first sheet S1 and the second sheet S2 to the post-processing device 3A. If the post-processing information indicates that the direct linking is performed, the post-processing device 3A controls various configurations to perform the direct linking.

As illustrated in FIG. 3, in accordance with the discharge of the sheet S from the image forming apparatus 2, the front roller 31-1 and the positioning plate 31-3 are driven. The front roller 31-1 moves the first sheet S1 discharged from the image forming apparatus 2 in the transport direction (direction D1 which is illustrated). The transport direction is a direction of the discharge port 31-6 which discharges the sheet S from a receiving port which receives the sheet S, that is, a direction along the transport path in which the sheet S is transported.

In addition, the front roller 31-1 moves the first sheet S1 in the transport direction, and transports the first sheet S1 to the processing tray 31-2. The positioning plate 31-3 moves along the processing tray 31-2 in a direction reverse to the transport direction in accordance with the discharge of the first sheet S1 from the image forming apparatus 2. The direction reverse to the transport direction is a direction D2 illustrated in FIG. 3.

As illustrated in FIG. 4, the positioning plate 31-3 supports the first sheet S1 transported by the front roller 31-1, and positions a position of the first sheet S1 to a predetermined position. At the predetermined position, an end part of the first sheet S1 is disposed at a staple position of the stapler 31-7. The staple position of the stapler 31-7 is a position at which the stapler 31-7 binds the staple SP by the stapling.

As illustrated in FIG. 5, the front roller 31-1 moves the second sheet S2 discharged from the image forming apparatus 2 in the transport direction after transporting the first sheet S1.

As illustrated in FIG. 6, the front roller 31-1 stops in accordance with the disposition of an end part of the second sheet S2 at the staple position. In addition, the positioning plate 31-3 may finely adjust the position of the first sheet S1 in accordance with the disposition of the second sheet S2 at the staple position.

As illustrated in FIG. 7, the positions of the first sheet S1 and the second sheet S2 are adjusted by the front roller 31-1 and the positioning plate 31-3. The stapler 31-7 performs the stapling in accordance with the disposition of the position at which the end part of the first sheet S1 and the end part of the second sheet S2 overlap each other at the staple position. The stapler 31-7 performs the stapling for binding the first sheet S1 and the second sheet S2 at two locations by the staple SP. Accordingly, the first sheet S1 and the second sheet S2 are linked to each other.

As illustrated in FIG. 8, in accordance with the stapling performed by the stapler 31-7 with respect to the first sheet S1 and the second sheet S2, the positioning plate 31-3 moves in the transport direction. Specifically, the positioning plate 31-3 moves to a standby position without interfering the transport of the sheet S. According to this, the first sheet S1 and the second sheet S2 automatically drop to the end part of the processing tray 31-2. The discharge gate 31-4 switches the transport path to the discharge port 31-6 side in accordance with the movement of the positioning plate 31-3 to the standby position.

As illustrated in FIG. 9, in accordance with the linking of the first sheet S1 and the second sheet S2 to each other, the discharge roller 31-5 moves the first sheet S1 and the second sheet S2 in the transport direction. The discharge port 31-6 discharges the linked sheets S.

FIG. 10 is a view illustrating an example of the sheets S linked to each other by the direct linking. As illustrated in FIG. 10, the position at which the staple SP is linked is a position at which the end part of the first sheet S1 and the end part of the second sheet S2 overlap each other. The sheets S linked to each other by the direct linking are disposed at a position at which the staple is seen from the surface on which the toner image is formed.

After the first sheet S1 is discharged, the post-processing device 3A operates considering the second sheet S2 as the first sheet S1 and the newly discharged sheet S as the second sheet S2. Accordingly, the post-processing device 3A can link two or more sheets S to each other.

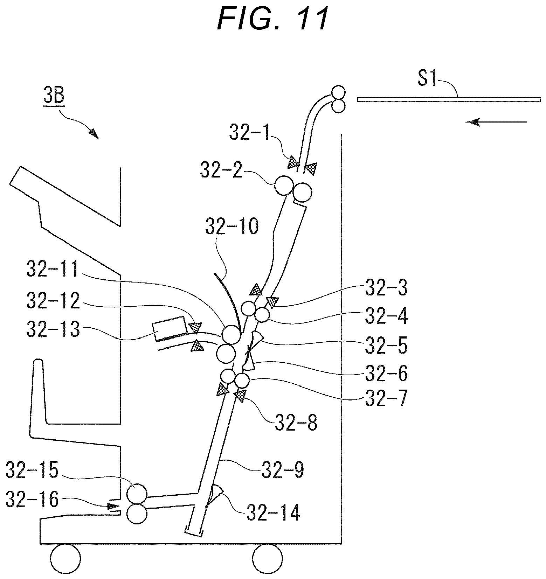

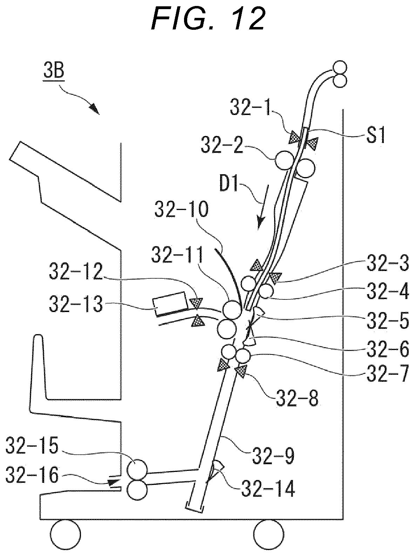

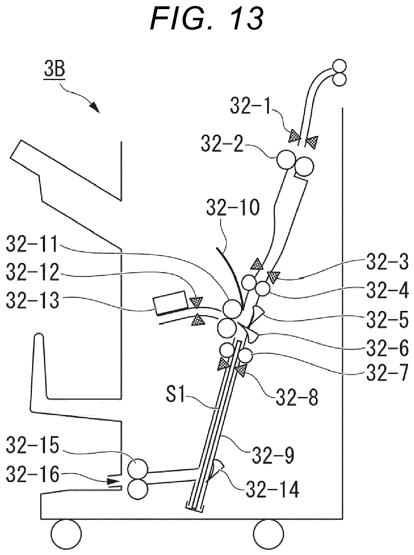

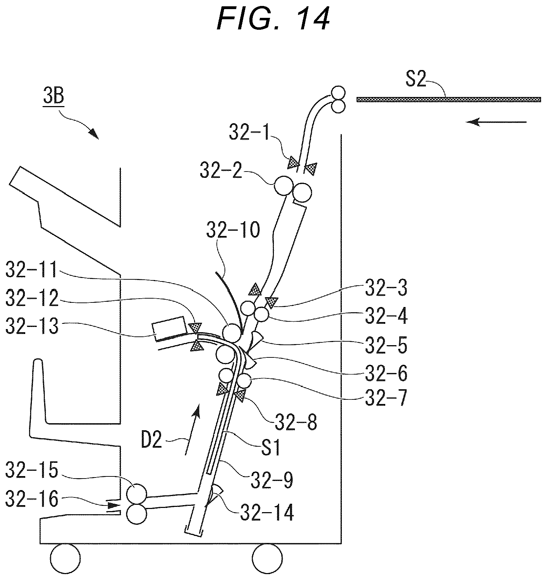

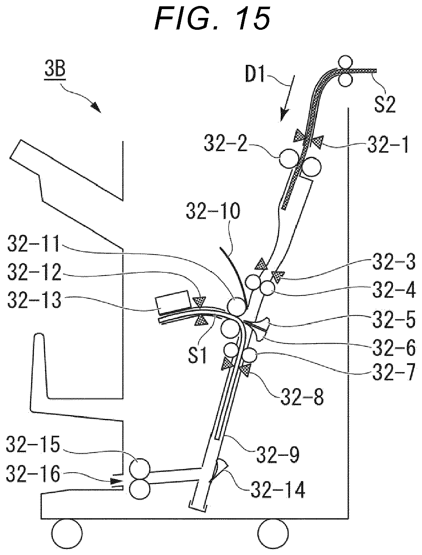

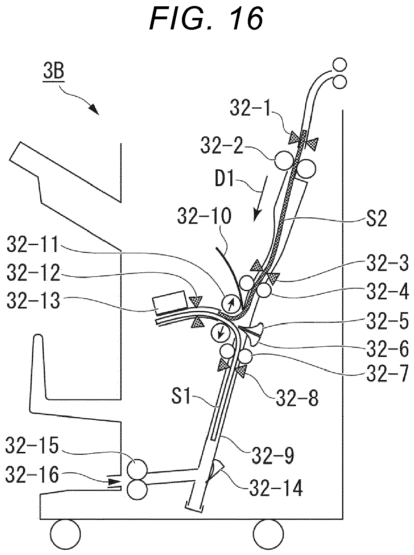

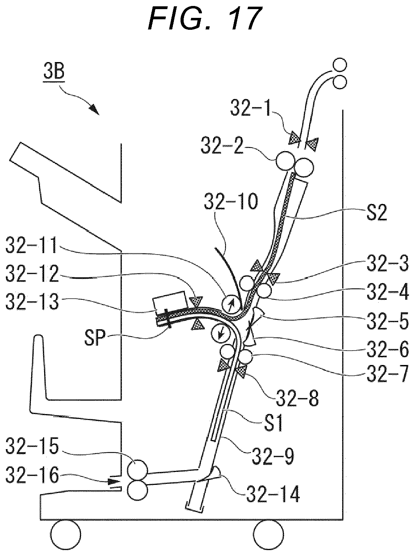

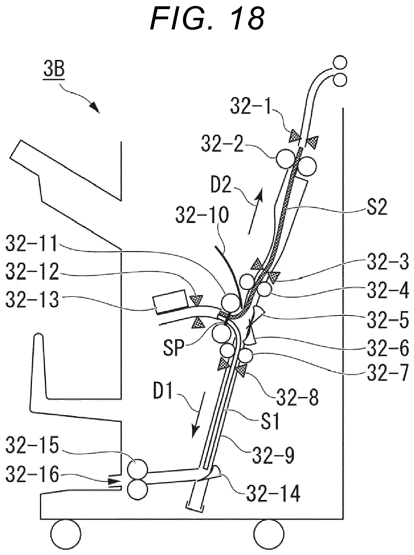

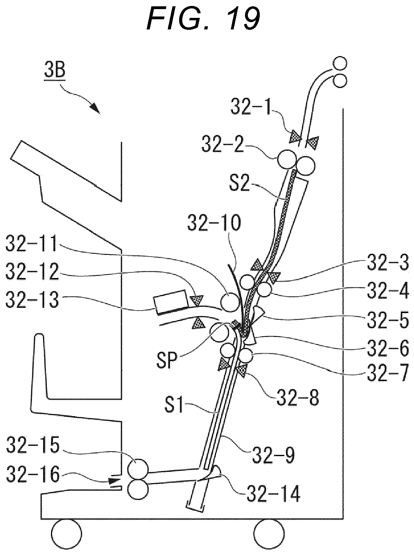

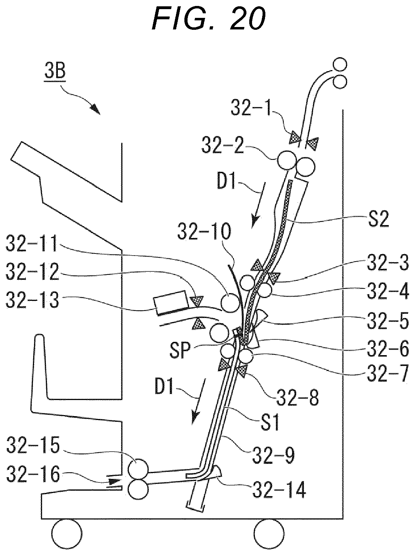

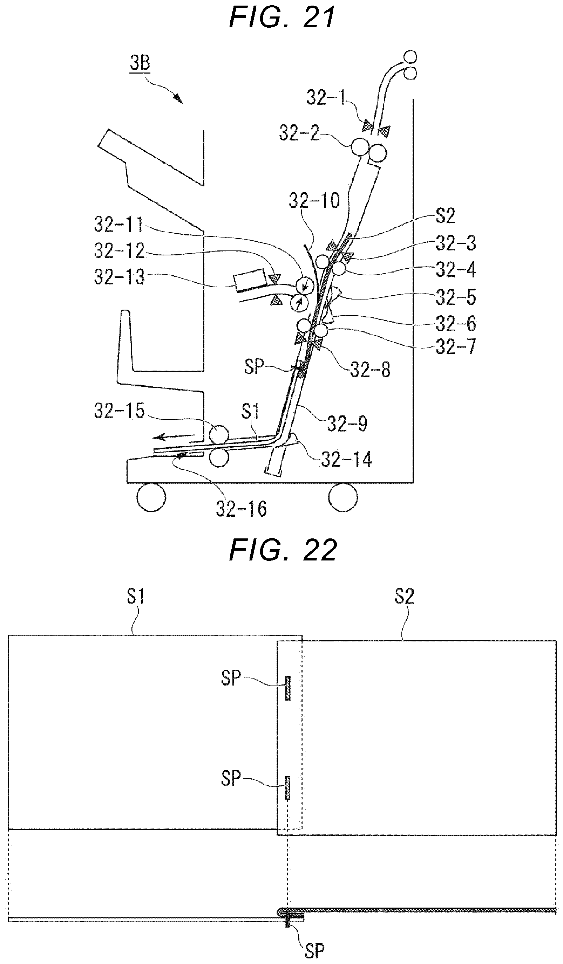

Hereinafter, a configuration of the post-processing device 3B will be described with reference to FIGS. 11, 12, 13, 14, 15, 16, 17, 18, 19, 20, and 21. FIG. 11 is a view schematically illustrating an example of a configuration of the post-processing device 3B. FIG. 12 is a first view schematically illustrating the position of the first sheet S1 in the post-processing device 3B. FIG. 13 is a second view schematically illustrating the position of the first sheet S1 in the post-processing device 3B. FIG. 14 is a third view schematically illustrating the position of the first sheet S1 in the post-processing device 3B. FIG. 15 is a first view schematically illustrating the position of the second sheet S2 in the post-processing device 3B. FIG. 16 is a second view schematically illustrating the position of the second sheet S2 in the post-processing device 3B. FIG. 17 is a view schematically illustrating an example of the position of the staple SP which links the first sheet S1 and the second sheet S2 to each other in the post-processing device 3B. FIG. 18 is a first view schematically illustrating an example of the folding in the post-processing device 3B. FIG. 19 is a second view schematically illustrating an example of the folding in the post-processing device 3B. FIG. 20 is a third view schematically illustrating an example of the folding in the post-processing device 3B. FIG. 21 is a view schematically illustrating an example of a configuration of a discharge roller 32-15 and a discharge port 32-16 in the post-processing device 3B.

As illustrated in FIG. 11, in an example of the embodiment, the post-processing device 3B includes an inlet sensor 32-1, a front roller 32-2, a first intermediate sensor 32-3, a first intermediate roller 32-4, a first intermediate gate 32-5, a second intermediate gate 32-6, a second intermediate roller 32-7, a second intermediate sensor 32-8, a processing tray 32-9, a long veneer 32-10, a staple front roller 32-11, a staple front sensor 32-12, a stapler 32-13, a discharge gate 32-14, the discharge roller 32-15, and the discharge port 32-16.

The front roller 32-2, the first intermediate roller 32-4, the staple front roller 32-11, the second intermediate roller 32-7, and the discharge roller 32-15 move the sheet S in the transport direction or in the direction reverse to the transport direction by driving. Specifically, the front roller 32-2, the first intermediate roller 32-4, the staple front roller 32-11, the second intermediate roller 32-7, and the discharge roller 32-15 rotate while nipping the sheet S from both sides in the thickness direction, and move the sheet S.

In the processing tray 32-9, the sheet S which moves in the transport path in the post-processing device 3B is temporarily disposed.

The inlet sensor 32-1, the first intermediate sensor 32-3, and the second intermediate sensor 32-8 detect whether or not the sheet S which moves in the post-processing device 3B passed through the position of the sensor. Each unit included in the post-processing device 3B operates based on the detection result detected by the inlet sensor 32-1, the first intermediate sensor 32-3, the second intermediate sensor 32-8, and the staple front sensor 32-12.

The stapler 32-13 performs the stapling with respect to the sheet S disposed at the position at which the stapling is performed.

The first intermediate gate 32-5, the second intermediate gate 32-6, the discharge gate 32-14 switch the transport path of the sheet S to be moved.

The first intermediate gate 32-5 switches the transport path in accordance with the position at which the first intermediate gate 32-5 is disposed. Specifically, the first intermediate gate 32-5 switches the transport path to make it possible for the sheet S to move between the first intermediate roller 32-4 and the staple front roller 32-11. In addition, the first intermediate gate 32-5 switches the transport path to make it possible for the sheet S to move between the first intermediate roller 32-4 and the second intermediate roller 32-7. In addition, the second intermediate gate 32-6 switches the transport path in accordance with the position at which the second intermediate gate 32-6 is disposed. Specifically, the second intermediate gate 32-6 switches the transport path to make it possible for the sheet S to move between the first intermediate roller 32-4 and the second intermediate roller 32-7. In addition, the second intermediate gate 32-6 switches the transport path to make it possible for the sheet S to move between the staple front roller 32-11 and the second intermediate roller 32-7. In addition, the discharge gate 32-14 switches the discharge path of the sheet S. Specifically, the discharge gate 32-14 switches the discharge port of the sheet S to the discharge port 32-16 or the discharge port other than the discharge port 32-16. The discharge port 32-16 discharges the post-processed sheet S by the post-processing device 3B. In addition, if the discharge gate 32-14 does not discharge the sheet S to the discharge port other than the discharge port 32-16, the post-processing device 3B may be provided with the discharge gate 31-4.

The long veneer 32-10 is pushed out toward the sheet S, and makes a fold by pushing the sheet S. The long veneer 32-10 is an example of a folding unit.

In the post-processing device 3B, the sheets S are fed in an order of the first sheet S1 and the second sheet S2 from the image forming apparatus 2. If the post-processing information indicates that the folding is performed, the post-processing device 3B controls various configurations to perform the folding.

As illustrated in FIG. 12, in accordance with the discharge of the first sheet S1 from the image forming apparatus 2, the inlet sensor 32-1 detects the first sheet S1. The front roller 32-2 and the first intermediate roller 32-4 are driven in accordance with the detection of the first sheet S1 by the inlet sensor 32-1. The front roller 32-2 moves the first sheet S1 in the transport direction (direction D1 which is illustrated) discharged from the image forming apparatus 2.

In addition, the first intermediate sensor 32-3 detects the first sheet S1 to be moved in the transport direction by the front roller 32-2. The first intermediate roller 32-4 and the second intermediate roller 32-7 move the first sheet S1 in the direction of the processing tray 32-9. Here, the first intermediate gate 32-5 switches the transport path in which the sheet S can move between the first intermediate roller 32-4 and the second intermediate roller 32-7 in a first state. In addition, the second intermediate gate 32-6 switches the transport path in which the sheet S can move between the first intermediate roller 32-4 and the second intermediate roller 32-7 in the first state. The first state is a state where the sheet S does not exist on the processing tray 32-9 (for example, FIG. 12).

As illustrated in FIG. 13, the second intermediate sensor 32-8 detects the first sheet S1 to be moved in the transport direction by the first intermediate roller 32-4 and the second intermediate roller 32-7. The first intermediate roller 32-4 and the second intermediate roller 32-7 rotate only at a predetermined rotational speed in accordance with the detection of the first sheet S1 by the second intermediate sensor 32-8. Accordingly, the first sheet S1 is moved to the end part of the processing tray 32-9. The second intermediate gate 32-6 switches the transport path in which the sheet S can move between the second intermediate roller 32-7 and the staple front roller 32-11 in a second state. The second state is a state where the sheet S is moved to the end part of the processing tray 32-9 (for example, FIG. 13).

As illustrated in FIG. 14, the second intermediate roller 32-7 moves the first sheet S1 in accordance with the switching of the transport path by the second intermediate gate 32-6. The first sheet S1 moves in the direction reverse to the transport direction by the second intermediate roller 32-7, that is, in the direction of the staple front roller 32-11. The staple front sensor 32-12 detects the first sheet S1 to be moved by the staple front roller 32-11 and the second intermediate roller 32-7. The staple front roller 32-11 and the second intermediate roller 32-7 rotate only at the predetermined rotational speed in accordance with the detection of the first sheet S1 by the staple front sensor 32-12. Accordingly, the end part of the first sheet S1 is disposed at the staple position of the stapler 32-13. The staple position of the stapler 32-13 is a position at which the stapler 32-13 binds the staple SP by the stapling. In accordance with the disposition of the first sheet S1 at the staple position, the second sheet S2 which is discharged from the image forming apparatus 2 is fed to the post-processing device 3B.

As illustrated in FIG. 15, in accordance with the discharge of the second sheet S2 from the image forming apparatus 2, the inlet sensor 32-1 detects the second sheet S2. The front roller 32-2 and the first intermediate roller 32-4 are driven in accordance with the detection of the first sheet S1 by the inlet sensor 32-1. The front roller 32-2 moves the second sheet S2 discharged from the image forming apparatus 2 in the transport direction.

As illustrated in FIG. 16, the first intermediate sensor 32-3 detects the second sheet S2 to be moved in the transport direction by the front roller 32-2. Here, the first intermediate gate 32-5 switches the transport path in which the sheet S can move between the first intermediate roller 32-4 and the staple front roller 32-11 in a third state. The third state is a state where the first sheet S1 is supported by the staple front roller 32-11 and the second intermediate roller 32-7 (for example, FIG. 16). The first intermediate gate 32-5 switches the transport path, for example, in accordance with the detection of the second sheet S2 by the first intermediate sensor 32-3 in the third state.

In addition, the staple front roller 32-11 separates both rollers from each other (nip releasing) if the first intermediate sensor 32-3 detects the second sheet S2 in the third state. The first intermediate roller 32-4 moves the second sheet S2 in the direction of the staple front roller 32-11 in accordance with the separation of both rollers of the staple front roller 32-11.

As illustrated in FIG. 17, the staple front sensor 32-12 detects the second sheet S2 to be moved by the first intermediate roller 32-4. The first intermediate roller 32-4 rotates only at the predetermined rotational speed in accordance with the detection of the second sheet S2 by the staple front sensor 32-12. Accordingly, the end part of the second sheet S2 is disposed at the staple position of the stapler 32-13. The stapler 32-13 performs the stapling with respect to the first sheet S1 and the second sheet S2 in accordance with the movement of the first sheet S1 and the second sheet S2 to the staple position. The stapler 32-13 performs the stapling for binding the first sheet S1 and the second sheet S2 at two locations by the staple SP. Accordingly, the first sheet S1 and the second sheet S2 are linked to each other. Here, the first sheet S1 and the second sheet S2 are stapled in a state where the end parts are aligned.

As illustrated in FIG. 18, in accordance with the stapling performed by the stapler 32-13, the first sheet S1 and the second sheet S2 which are linked to each other are moved. Specifically, the first sheet S1 is moved in the transport direction by the second intermediate roller 32-7. In addition, the second sheet S2 is moved in the direction reverse to the transport direction by the first intermediate roller 32-4. The first intermediate roller 32-4 and the second intermediate roller 32-7 stop in accordance with the passage of the sheet S through the staple front roller 32-11. Specifically, the first intermediate roller 32-4 and the second intermediate roller 32-7 rotate only at the predetermined rotational speed as the staple front sensor 32-12 does not detect the sheet S. Accordingly, the sheet S is supported by the first intermediate roller 32-4 and the second intermediate roller 32-7. In addition, in the sheet S, a location at which the sheets S are bound by the staple SP is disposed in a space surrounded by the first intermediate roller 32-4, the second intermediate roller 32-7, and the staple front roller 32-11. In a state of being supported by the first intermediate roller 32-4 and the second intermediate roller 32-7, in the sheet S, at the location at which the sheets are bound by the staple SP, loosening is generated.

As illustrated in FIG. 19, in accordance with the stop of the first intermediate roller 32-4 and the second intermediate roller 32-7, the long veneer 32-10 is pushed against the second sheet S2. In the second sheet S2, the position at which the long veneer 32-10 is pushed against is a position (on an inner side) which is closer to the center of the second sheet S2 than the position of the staple SP. In the second sheet S2, in accordance with the pushing of the long veneer 32-10, a fold is made. Accordingly, the end part of the second sheet S2 is in a folded state.

As illustrated in FIG. 20, the first intermediate roller 32-4 and the second intermediate roller 32-7 move the sheet S in accordance with the making of the fold in the second sheet S2 by the long veneer 32-10. Specifically, the first intermediate roller 32-4 and the second intermediate roller 32-7 move the first sheet S1 and the second sheet S2 in the transport direction.

As illustrated in FIG. 21, in accordance with the movement of the linked sheets S in the transport direction, both of the staple front rollers 32-11 approach each other and are disposed (nipped state). In addition, in accordance with the movement of the linked sheets S in the transport direction, the discharge gate 32-14 switches the discharge port to the discharge port 32-16. The first intermediate roller 32-4, the second intermediate roller 32-7, and the discharge roller 32-15 move the linked sheets S in the transport direction. The discharge port 32-16 discharges the linked sheets S.

FIG. 22 is a view illustrating an example of the sheets S linked to each other by the folding. As illustrated in FIG. 22, the position at which the staple SP is linked is a position at which the end part of the first sheet S1 and the end part of the second sheet S2 overlap each other. In the second sheet S2 linked by the folding, the end part linked by the staple SP is folded. Accordingly, the sheets S linked to each other by the folding are disposed at a position at which the staple is not seen from the surface on which the toner image is formed.

The post-processing device 3B operates considering the second sheet S2 as the first sheet S1 and the newly discharged second sheet S2 as the second sheet S2 after the first sheet S1 is discharged. Accordingly, the post-processing device 3B can link two or more sheets S to each other.

The post-processing device 3 may be configured to have both functions of the post-processing device 3A and the post-processing device 3B, and may be configured to have any one function of the post-processing device 3A and the post-processing device 3B.

The information generating device 10 of the embodiment is a device for determining the blank when forming the toner image on the sheets S linked to each other by the direct linking and folding. Hereinafter, a specific configuration of the information generating device 10 of the embodiment will be described with reference to the drawings.

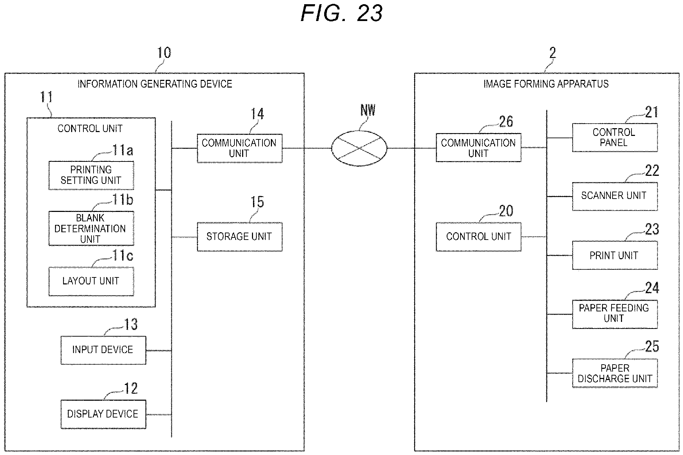

FIG. 23 is a functional configuration view illustrating an example of the configuration of the information generating device 10 of the embodiment.

The information generating device 10 includes a control unit 11, the input device 13, the display device 12, a communication unit 14, and a storage unit 15. The communication unit 14 receives the information from the image forming apparatus 2, and supplies the information to the control unit 11. In addition, the communication unit 14 transmits the information generated by the control unit 11 to the image forming apparatus 2.

A user inputs various types of information by using the input device 13. The display device 12 displays various types of information and discloses the information to the user, based on the control of the control unit 11.

The control unit 11 is provided with a central processing unit (hereinafter, CPU), and realizes various functions by executing a program stored in the storage unit 15. The control unit 11 realizes, for example, a printing setting unit 11a, a blank determination unit 11b, and a layout unit 11c as functional units thereof.

The printing setting unit 11a is a functional unit which provides a set function related to the printing of the sheet S. The printing setting unit 11a is, for example, a functional unit which provides a printer driver. In an example of the embodiment, the display device 12 displays an image (hereinafter, a printer driver image IM) related to various settings in the printer driver. In addition, the user inputs the setting related to the printing of the sheet S to the input device 13 in accordance with the display of the printer driver image IM on the display device 12.

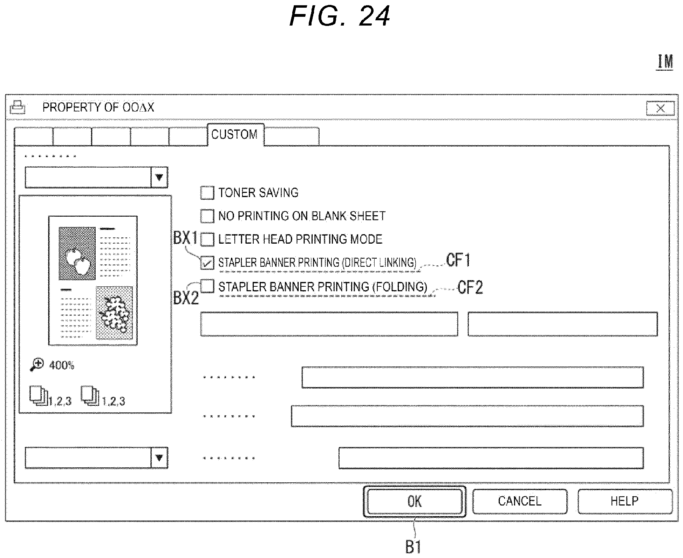

FIG. 24 is a view illustrating an example of the printer driver image IM displayed on the display device 12. In the printer driver image IM, an image which shows the setting related to the printing of the sheet S is included. In addition, in the printer driver image IM, information that shows the setting related to the post-processing of the sheet S is included. The printing setting unit 11a displays the printer driver image IM on the display device 12 and receives the setting related to the printing, in accordance with the receiving of the printing by the information generating device 10. In the printer driver image IM, for example, a message which shows a setting CF1 and a setting CF2 is included. The message which shows the setting CF1 is, for example, "stapler banner printing (direct linking)" illustrated in the drawing. In addition, the message which shows the setting CF2 is, for example, "stapler banner printing (folding)" illustrated in the drawing. In addition, in the printer driver image IM, a check box (check box BX1 illustrated in the drawing) for selecting the validity or invalidity of the setting CF1, is provided. In addition, in the printer driver image IM, a check box (check box BX2 illustrated in the drawing) for selecting the validity or invalidity of the setting CF2, is provided. In addition, in the printer driver image IM, a determination button (button B1 illustrated in the drawing) for determining various settings based on the printer driver image IM is provided.

If the direct linking is performed with respect to the sheet S, the user inputs a check by using the input device 13 in the check box BX1 included in the printer driver image IM. In addition, if the folding is performed with respect to the sheet S, the user inputs the check by using the input device 13 in the check box BX2 included in the printer driver image IM. The user clicks the button B1 and determines various settings if the setting related to the printing of the sheet S is finished based on the printer driver image IM.

The printing setting unit 11a obtains the setting related to the printing of the sheet S performed based on the printer driver image IM as printing setting information. In other words, the printing setting information includes information that shows that the direct linking is performed or the folding is performed as the post-processing. In other words, in the printing setting information, the post-processing information is included.

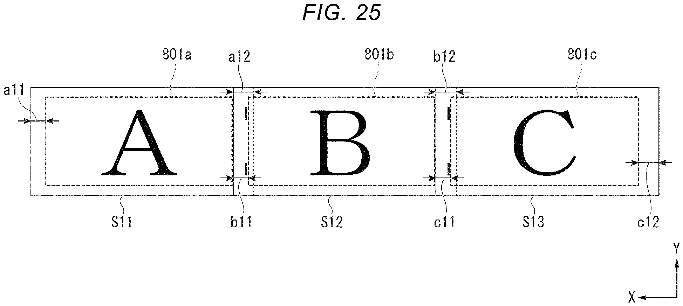

Hereinafter, with reference to FIG. 25, the blank of the sheets S linked to each other by the direct linking will be described in detail. FIG. 25 is a view schematically illustrating an example of the blank of the sheets S linked to each other by the direct linking. In FIG. 25, a case where three sheets S are linked to each other will be described. Specifically, in an example of FIG. 25, a left end part sheet S11, a center sheet S12, and a right end part sheet S13 are linked to each other by the direct linking. The left end part sheet S11 is the sheet S which is discharged first among the linked sheets S. The right end part sheet S13 is the sheet S which is discharged last among the linked sheets S. The center sheet S12 is the sheet S which is disposed at the position of the left end part sheet S11 at the timing other than the timing at which the right end part sheet S13 is discharged.

In addition, in the following description, the direction of the sheet S will be described by using an XY coordinate system. A Y-axis is an axis illustrating a longitudinal direction of the sheet S. An X-axis is an axis illustrating a lateral direction of the sheet S. Hereinafter, the direction of the Y-axis is also simply described as the longitudinal direction. In addition, the direction of the X-axis is also simply described as the lateral direction. In addition, a positive direction of the Y-axis is also described as up or an upper part, and a negative direction of the Y-axis is also described as down or a lower part. In addition, a positive direction of the X-axis is also described as left or a leftward direction, and a negative direction of the X-axis is also described as right or a rightward direction.

In an example illustrated in FIG. 25, the sheet S is used while the side in the lateral direction is a long side. In addition, in the sheet S, the toner image (illustrated in the drawing, "ABC") is formed in the lateral direction, and the sheets S are linked to each other in the lateral direction by the direct linking.

In a case of the direct linking, the blank determination unit 11b determines the blank of the left end part sheet S11 in a blank region 801a. In addition, in a case of the direct linking, the blank determination unit 11b determines the blank of the center sheet S12 in a blank region 801b. In addition, in a case of the direct linking, the blank determination unit 11b determines the blank of the right end part sheet S13 in a blank region 801c. In the following description, if the blank region 801a, the blank region 801b, and the blank region 801c are not distinguished from each other, the blanks will be described as a blank region 801 together.

In the blank region 801, a region which has an edge of the sheet S, that is, a region to the position separated from the edge only by a predetermined length is included. The predetermined length is a length to the position at which the image forming apparatus 2 can form the toner image on the sheet S. In the following description, the region having the length from the end part of the sheet S to the position at which the image forming apparatus 2 can form the toner image on the sheet S is described as a specification blank region.

In addition, in the blank region 801a, in addition to the specification blank region, a first region a11 and a second region a12 are included. In addition, in the blank region 801b, in addition to the specification blank region, a third region b11 and a fourth region b12 are included. In addition, in the blank region 801c, in addition to the specification blank region, a fifth region c11 and a sixth region c12 are included.

First, the blank region 801b will be described. The third region b11 is a region based on the staple position at which the sheet S including the blank region 801b and the other linked sheets S are bound by the staple SP. Specifically, the third region b11 is a region based on the staple position at which the sheet S (in the example, left end part sheet S11) discharged one sheet before the center sheet S12, and the center sheet S12 are bound. As described above, in the example, the staple SP binds the sheets at two locations in the direct linking. In this case, the third region b11 is a region from the end part of the center sheet S12 to the straight line that connects two staples SP to each other. The end part of the center sheet S12 is the end part on the left side having the length in the longitudinal direction. In addition, the fourth region b12 is a region based on the position at which the other linked sheets S overlap the sheet S including the blank region 801b. Here, the length of the overlapped part between the sheets S is determined in advance based on the structure of the post-processing device 3. In this case, the fourth region b12 is a region to the position separated from the end part of the center sheet S12 by the length of the overlapped part of the other sheets. In this case, the end part of the center sheet S12 is an end part on the right side having the length in the longitudinal direction.

Next, the blank region 801a will be described. The first region a11 is a region based on the position at which the sheets S linked to each other by the direct linking are bound by the staple SP. Here, among the two end parts having the longitudinal direction of the left end part sheet S11, the staple SP is not disposed at the end part to which the center sheet S12 is not linked. In other words, the staple SP is disposed at the end part on the left side of the sheet S other than the left end part sheet S11. Here, if the blank region 801a is a region which does not consider the staple SP disposed at the left side end part, there is a case where the balance of the toner images formed in each of the sheets S is collapsed. Specifically, there is a case where only the toner image of the left end part sheet S11 is disposed to be close to the left side. Therefore, in the blank region 801a, similar to the other sheets S, the first region a11 based on the position at which the sheets S are bound by the staple SP is included. The position and the size of the first region a11 in the left end part sheet S11 are identical to the position and the size of the third region b11 in the center sheet S12. In addition, the second region a12 is a region based on the position at which the other linked sheets S overlap the sheet S including the blank region 801a. Since the position and the size of the second region a12 in the left end part sheet S11 are identical to the position and the size of the fourth region b12 in the center sheet S12, the description thereof will be omitted.

Next, the blank region 801c will be described. The fifth region c11 is a region based on the position at which the sheets S linked to each other by the direct linking are bound by the staple SP. Since the position and the size of the fifth region c11 in the blank region 801c are identical to the position and the size of the third region b11 in the blank region 801b, the description thereof will be omitted. The sixth region c12 is a region based on the position at which the other linked sheets S overlap the sheet S. Here, among the two end parts having the longitudinal direction of the right end part sheet S13, the sheet S does not overlap the end part to which the center sheet S12 is not linked. In other words, the other sheets S overlap the end part on the right side of the sheet S other than the right end part sheet S13. Here, if the blank region 801c is a region which does not consider the sheet S that overlaps the end part on the right side, there is a case where the balance of the toner image and the other sheets S is collapsed. Specifically, there is a case where only the toner image of the right end part sheet S13 is disposed to be close to the right side. Therefore, in the blank region 801c, the sixth region c12 based on the position at which the other sheets S similarly overlap the other sheets S is included. The position and the size of the sixth region c12 in the blank region 801c are identical to the position and the size of the fourth region b12 in the center sheet S12.

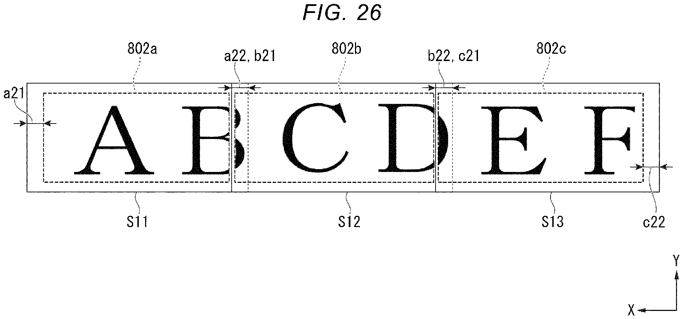

Next, with reference to FIG. 26, the blank of the sheets S linked to each other by the folding will be described in detail. FIG. 26 is a view schematically illustrating an example of the blank of the sheets S linked to each other by the folding. In FIG. 26, a case where three sheets S (the left end part sheet S11, the center sheet S12, and the right end part sheet S13) are linked to each other will be described.

In an example illustrated in FIG. 26, on the sheets S, the toner images (illustrated in the drawing, "ABCDEF") are formed in the lateral direction, and the sheets S are linked to each other in the lateral direction by the folding.

In a case of the folding, the blank determination unit 11b determines the blank of the left end part sheet S11 in a blank region 802a. In addition, in a case of the folding, the blank determination unit 11b determines the blank of the center sheet S12 in a blank region 802b. In addition, in a case of the folding, the blank determination unit 11b determines the blank of the right end part sheet S13 in a blank region 802c. In the following description, if the blank region 802a, the blank region 802b, and the blank region 802c are not distinguished from each other, the blanks will be described as a blank region 802 together. In the blank region 802, a specification blank region is included.

In addition, in the blank region 802a, in addition to the specification blank region, a first region a21 and a second region a22 are included. In addition, in the blank region 802b, in addition to the specification blank region, a third region b21 and a fourth region b22 are included. In addition, in the blank region 802c, in addition to the specification blank region, a fifth region c21 and a sixth region c22 are included.

First, the blank region 802b will be described. The third region b21 is a region based on the position of a fold made on the sheet S including the blank region 802b. Therefore, the third region b21 is a region from the end part of the center sheet S12 to the position at which the fold is made. The end part of the center sheet S12 is an end part on the left side having a length in the longitudinal direction. In addition, the fourth region b22 is a region based on the position of the fold made on the sheet S discharged next after the sheet S including the blank region 802b. As described above, in the folding, the sheets S are bound to each other by the staple SP in a state where the end parts are aligned. In addition, in the folding, when linking two certain sheets S to each other, the fold is made on the sheet S discharged later. Here, the sheet S on which the fold is not made overlaps the sheet S on which the fold is made from the end part of the sheet S to the position of the fold of the sheet S on which the fold is made. Therefore, the fourth region b22 is a region having the same size as that of the third region b21 disposed at the end part on the left side of the center sheet S12, and is a region disposed on the right side of the center sheet S12.

Next, the blank region 802a will be described. The first region a21 is a region which corresponds to the region from the end part on the left side of the certain sheet S to the position at which the fold is made. Here, among the two end parts having the longitudinal direction of the left end part sheet S11, the end parts to which the center sheet S12 is not linked are not bound by the staple SP, and the fold is not made. In other words, the end parts are bound by the staple SP at the end part on the left side of the sheet S other than the left end part sheet S11, and the fold is made. Here, if the blank region 802a is a region which does not consider the staple SP disposed at the end part on the left side and the fold, there is a case where the balance of the other sheet S and the toner image is collapsed. Specifically, there is a case where only the toner image of the left end part sheet S11 is disposed to be close to the left side. Therefore, in the blank region 802a, similar to the other sheet S, a region based on the position of the fold made on the sheet S is included. The position and the size of the first region a21 in the left end part sheet S11 are identical to the position and the size of the third region b21 on the center sheet S12. The second region a22 is a region based on the position of the fold made on the sheet S discharged next after the sheet S including the blank region 802b. Since the position and the size of the second region a22 in the left end part sheet S11 are identical to the position and the size of the fourth region b22 in the center sheet S12, the description thereof will be omitted.

Next, the blank region 802c will be described. The fifth region c21 is a region based on the position of the fold made on the sheet S including the blank region 802c. Since the position and the size of the fifth region c21 in the right end part sheet S13 are identical to the position and the size of the third region b21 in the center sheet S12, the description thereof will be omitted. The sixth region c22 is a region which corresponds to the region based on the position of the fold made on the sheet S discharged next after the certain sheet S. Here, among the two end parts having the longitudinal direction of the right end part sheet S13, the sheet S does not overlap at the end part on the right side to which the center sheet S12 is not linked. In other words, the other sheets S overlap the right side of the sheets S other than the right end part sheet S13. Here, if the blank region 801c is a region which does not consider the sheets S that overlap the end part on the right side, there is a case where the balance of the other sheet S and the toner image is collapsed. Specifically, there is a case where only the toner image of the right end part sheet S13 is disposed to be close to the right side. Therefore, in the blank region 802c, the sixth region c22 based on the position at which the other sheets S similarly overlap the other sheets S is included. The position and the size of the sixth region c22 in the blank region 802c are identical to the position and the size of the fourth region b22 in the center sheet S12.

Returning to FIG. 23, the blank determination unit 11b determines the blanks of the linked sheets S based on the image information and the printing setting information (post-processing information). Specifically, the blank determination unit 11b determines the blanks of the sheets S linked to each other by the direct linking if the post-processing information indicates that the direct linking is performed. If the direct linking is performed, the blank determination unit 11b determines the blank of the initial sheet S on which the toner image is formed, in the blank region 801a. In addition, the blank determination unit 11b determines the blank of the sheet S on which the final toner image is formed, in the blank region 801c. In addition, the blank determination unit 11b determines the blank of the sheet S on which the toner image is formed other than the initial sheet S and the final sheet S, in the blank region 801b.

In addition, if the post-processing information indicates that the folding is performed, the blank determination unit 11b determines the blanks of the sheets S linked to each other by the folding. If the folding is performed, the blank determination unit 11b determines the blank of the initial sheet S on which the toner image is formed, in the blank region 802a. In addition, the blank determination unit 11b determines the blank of the sheet S on which the final toner image is formed, in the blank region 802c. In addition, the blank determination unit 11b determines the blank of the sheet S on which the toner image is formed other than the initial sheet S and the final sheet S, in the blank region 802b.

The layout unit 11c determines a layout of the toner image formed on the sheet S, based on the image information and the information (hereinafter, blank information) that shows the blank determined by the blank determination unit 11b. In an example of the embodiment, a case where the image information is information that shows the characters, the number of characters, the font of the characters, and the size of the characters, will be described. In addition, in the example of the embodiment, in the layout unit 11c, characters are disposed one by one on each of the sheets S, and the characters at the center of the sheet S are disposed. The layout unit 11c generates the layout information that shows the position of the characters of each of the sheets S.

The communication unit 14 transmits the blank information determined by the blank determination unit 11b and the layout information generated by the layout unit 11c, to the image forming apparatus 2. The communication unit 26 provided in the image forming apparatus 2 receives the blank information and the layout information, and supplies the information to the control unit 20. The control unit 20 forms the characters or the image of an image forming target as the toner image on the sheet S, based on the blank information and the layout information. Specifically, the control unit 20 forms the toner image such that the characters or the image of the image forming target are disposed at the position (inner side) close to the center of each of the blank regions that shows the blank information, that is, at the position that shows the layout information. The image forming apparatus 2 discharges the sheet S on which the toner image is formed from the paper discharge unit 25 to the post-processing device 3. In addition, the image forming apparatus 2 supplies the post-processing information to the post-processing device 3. The post-processing device 3 performs the direct linking or the folding with respect to the sheet S discharged from the image forming apparatus 2, based on the post-processing information.

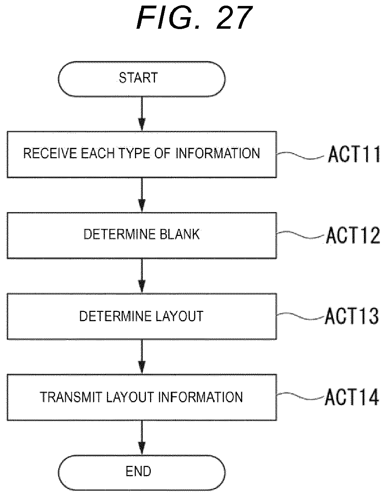

Hereinafter, an operation of the information generating device 10 will be described with reference to FIG. 27. FIG. 27 is a flowchart illustrating an example of the operation of the information generating device 10 of the embodiment. The communication unit 14 included in the information generating device 10 receives the image information and the printing setting information (post-processing information) from the image forming apparatus 2 or external equipment (ACT 11). The blank determination unit 11b determines the blank region of the sheet S based on the image information and the post-processing information (ACT 12). The layout unit 11c determines the layout of the toner image formed on the sheet S, based on the image information and the blank information determined by the blank determination unit 11b (ACT 13). The communication unit 14 transmits the image information and the layout information determined by the layout unit 11c to the image forming apparatus 2 (ACT 13).

In addition, in the description above, a case where the control unit 11 of the information generating device 10 includes the layout unit 11c is described, but the exemplary embodiment is not limited thereto. The information generating device 10 may be configured to transmit the blank information determined by the blank determination unit 11b to the external equipment, and to determine the layout of the toner image formed on the sheet S by the external equipment. In this case, the external equipment determines the layout based on the image information and the blank information received from the information generating device 10. The external equipment transmits the layout information and the image information to the image forming apparatus 2. The image forming apparatus 2 forms the toner image on the sheet S based on the received layout information and the image information.

As described above, the information generating device 10 of the embodiment is an information generating device which generates information (layout information) to be used by the image forming apparatus 2 that performs continuous printing by binding the plurality of sheets S using a sheet binding mechanism. The information generating device 10 includes the blank determination unit 11b. The blank determination unit 11b determines the blank region in a case of forming the toner image of the characters that show the image information on the plurality of sheets S, based on the image information.

Accordingly, the information generating device 10 can perform the continuous printing with respect to the image forming apparatus 2 by the fixed sheet S without using the long paper sheet dedicated to the continuous printing.

In addition, in the information generating device 10 of the embodiment, the blank determination unit 11b determines the blanks based on the blank of the center sheet S12, as the blank of the left end part sheet S11 and the right end part sheet S13. Specifically, the blank determination unit 11b includes the first region a11 and the second region a12 in the blank region of the left end part sheet S11. Accordingly, the information generating device 10 of the embodiment suppresses a case where only the toner image of the left end part sheet S11 is disposed to be close to the left side. In addition, the blank determination unit 11b includes the sixth region c12 and the sixth region c22 in the blank region of the right end part sheet S13. Accordingly, the information generating device 10 of the embodiment suppresses a case where only the toner image of the right end part sheet S13 is disposed to be close to the right side.

Accordingly, the information generating device 10 can link the sheets S on which the characters disposed with excellent balance are formed as the toner image to each other, and can allow the image forming apparatus 2 to perform the continuous printing.

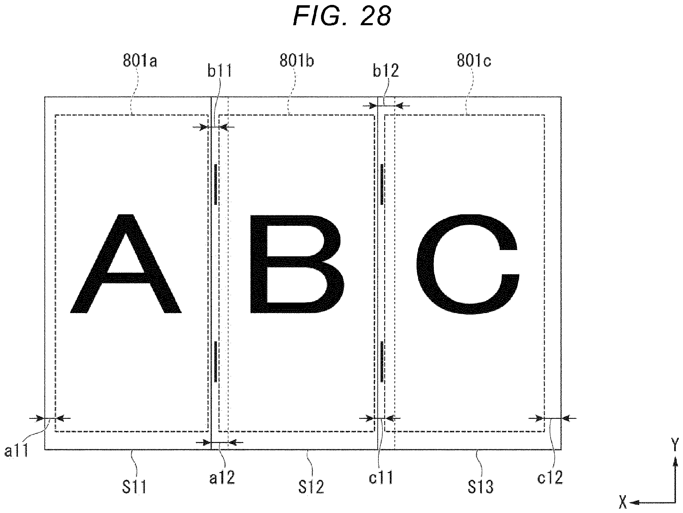

In addition, in the description above, a case where the sheet S is used while the side in the lateral direction is a long side, is described, but the exemplary embodiment is not limited thereto. FIG. 28 is a view schematically illustrating another example of the sheet S in the printing direction. As illustrated in FIG. 28, the sheet S may be used, for example, while the side in the longitudinal direction is a long side. In this case, the blank determination unit 11b determines the blank regions of each of the sheets S further based on the printing direction of the sheet S. The blank determination unit 11b changes the orientation of the specification blank region of the sheet S, for example, based on the information that shows the printing direction of the sheet S. In addition, a configuration in which the information that shows the printing direction of the sheet S is included in the image information, may be employed.

Accordingly, the information generating device 10 can allow the image forming apparatus 2 to perform the continuous printing by using the sheet S in the longitudinal direction and the sheet S in the lateral direction.

In addition, the information generating device 10 may allow the image forming apparatus 2 to perform the continuous printing with respect to the sheets S linked to each other such that the direction of the characters becomes the longitudinal direction.

In addition, in the description above, a case where the characters are disposed one by one on each of the sheets S is described, but the exemplary embodiment is not limited thereto. For example, if the sheets S are linked to each other by the folding, the blank regions of the adjacent sheets S are adjacent to each other. In this case, the image forming apparatus 2 may be configured to divide the characters or the image, which is the image forming target, for each size in the blank region of each of the sheets S, and to form the toner image. As illustrated in FIG. 26, the image forming apparatus 2 forms "A" and a part of "B" as the toner image in the left end part sheet S11. In addition, the image forming apparatus 2 forms the remaining part of "B", "C", and a part of "D" as the toner image in the center sheet S12. In addition, the image forming apparatus 2 forms the remaining part of "D", "E", and "F" as the toner image in the right end part sheet S13. Accordingly, the information generating device 10 can perform the continuous printing with respect to a character string by using a smaller number of sheets S than that of the characters.

In addition, the information generating device 10 may be configured to determine and layout the blank, based on the number of sheets S which is designated from the control panel 21 or the external equipment. In this case, the blank determination unit 11b determines the blank region on each of the sheets S based on the number of sheets S designated by the user. The blank determination unit 11b determines the blank region 801a or the blank region 802a as the blank of the initial sheet S (left end part sheet S11), based on the number designated by the user. In addition, the blank determination unit 11b determines the blank region 801c or the blank region 802c as the blank of the final sheet S (right end part sheet S13), based on the number designated by the user. In addition, the blank determination unit 11b determines the blank region 801b or the blank region 802b as the blank of the sheet S of the center sheet S12, based on the number designated by the user.

Accordingly, the information generating device 10 can allow the image forming apparatus 2 to perform the continuous printing with respect to the sheet S on which the toner image, such as the characters, is formed on the number of sheets S desired by the user.

In addition, in the description above, a case where the binding is performed at two locations by the staple SP when the stapler 31-7 and the stapler 32-13 link the sheets S to each other, is described, but the exemplary embodiment is not limited thereto. Here, if the number of the sheets S to be linked is large, there is a case where the staple SP does not ensure sufficient strength at the linked location at two locations. In this case, the blank determination unit 11b may have a configuration in which the number of sheets S is determined based on the image information. If the determined number of sheets S is greater than a predetermined number, the blank determination unit 11b transmits the information that shows that the sheets S are bound at two or more locations by the staple SP, to the communication unit 14. In addition, the blank determination unit 11b determines the blank in accordance with the number of the staple SP which binds the sheets S, that is, the number of staple positions. Specifically, the blank determination unit 11b determines the first region a11, the third region b11, and the fifth region c11 based on the distance from the end part on the left side to the farthest position of the staple SP. In addition, the blank determination unit 11b determines the regions based on the position of the fold if the first region a21, the third region b21, and the fifth region c21 are bound by the staple SP at two or more locations.

Accordingly, the information generating device 10 can allow the image forming apparatus 2 to perform the continuous printing more continuously while ensuring the strength of the sheet S.

In addition, the information generating device 10 may determine the orientation of the sheet S based on the font (type of the characters) by which the image information is illustrated. Here, in the font, even when the characters have the same size, there are a font having a narrow width and a font having a wide width. The blank determination unit 11b may have a configuration in which the orientation of the sheet S is determined based on the information that shows the fonts included in the image information. The blank determination unit 11b may determine, for example, that the sheet S is used while the side in the longitudinal direction is a long side in a case of the font having a narrow width based on the image information. In addition, the blank determination unit 11b may determine, for example, that the sheet S is used while the side in the lateral direction is a long side in a case of the font having a wide width based on the image information. The blank determination unit 11b determines the blank regions of each of the sheets S, based on the determined direction of the sheet S.

If the sheet S in the longitudinal direction is used for the font having a wide width, there is a case where the length of the linked sheets S becomes long and the strength of the sheet S is not sufficiently ensured. The information generating device 10 allows the image forming apparatus 2 to perform the continuous printing in accordance with the orientation of the sheet S that fits the width of the characters. Accordingly, the information generating device 10 can allow the image forming apparatus 2 to perform the continuous printing while ensuring the strength of the sheet S.

While certain embodiments have been described these embodiments have been presented by way of example only, and are not intended to limit the scope of the inventions. Indeed, the novel embodiments described herein may be embodied in a variety of other forms: furthermore various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. An information generating device which generates information to be used in an image forming apparatus that performs continuous printing by binding a plurality of sheets on which an image is formed over the plurality of sheets using a sheet binding mechanism, the device comprising:
a blank determination unit configured to determine blanks of the sheets in a case of forming the image that shows characters on the plurality of sheets based on the number of the characters formed on the sheets, the types of the characters, the sizes of the characters, and a sheet binding position of the sheet binding mechanism.

2. The device according to claim 1,
wherein the blank determination unit determines the blanks further based on a printing direction of the sheets.

3. The device according to claim 1 or 2,
wherein the blank determination unit determines the blanks based on the number of the sheets designated by a user.

4. The device according to any of claims 1 to 3,
wherein the blank determination unit determines the blanks based on the blanks of the sheets disposed at ends and the blanks of the sheets disposed at positions other than the ends among the plurality of sheets.

5. The device according to any of claims 1 to 4,
wherein the blank determination unit determines the blanks based on the number of the sheet binding positions at which binding is performed by the sheet binding mechanism.

6. The device according to any of claims 1 to 5,
wherein the blank determination unit determines the direction of the sheets in accordance with the types of the characters, and determines the blanks based on the determined direction.

7. The device according to any of claims 1 to 6,
wherein the blank determination unit determines the number of the sheets in accordance with the number of the characters, and determines the blanks based on the determined number of the sheets.

8. An image forming apparatus comprising:
the information generating device according to any of claims 1 to 7; and
a sheet binding mechanism.

9. The apparatus according to claim 8,
wherein the sheet binding mechanism further includes a folding unit which folds a sheet connected to a sheet to which printing is performed next among two sheets after binding end parts of the two sheets, and
wherein the blank determination unit determines the blanks based on a folding position at which the folding unit folds the sheet.

10. An information generating method for generating information to be used in an image forming apparatus that performs continuous printing by binding a plurality of sheets on which an image is formed over the plurality of sheets using a sheet binding mechanism, the method comprising:
determining blanks of the sheets in a case of forming the image that shows characters on the plurality of sheets based on the number of the characters formed on the sheets, the types of the characters, the sizes of the characters, and a sheet binding position.
